# EUROPÄISCHE PATENTSCHRIFT

(11) **EP 3 447 858 B1**
(45) Veröffentlichungstag und Bekanntmachung des Hinweises auf die Patenterteilung: **13.05.2020**
(21) Anmeldenummer: 18188143.4
(22) Anmeldetag: 09.08.2018
(51) Int. Cl.: H01R 39/64, B23Q 1/70

(54) **SPINDELVORRICHTUNG ZUM EINSATZ AN EINER NUMERISCH GESTEUERTEN WERKZEUGMASCHINE**
SPINDLE DEVICE FOR USE ON A NUMERICALLY CONTROLLED MACHINE TOOL
DISPOSITIF À BROCHE DESTINÉ À ÊTRE UTILISÉ SUR UNE MACHINE-OUTIL À COMMANDE NUMÉRIQUE

(30) Priorität: 23.08.2017 DE 102017007857
(43) Veröffentlichungstag der Anmeldung: 27.02.2019
(73) Patentinhaber: DECKEL MAHO Pfronten GmbH, 87459 Pfronten (DE)
(72) Erfinder: JUNG, Robert, 87459 Pfronten (DE); VEITTINGER, Hans, 87439 Kempten (DE)
(74) Vertreter: MERH-IP Matias Erny Reichl Hoffmann Patentanwälte PartG mbB

(56) Entgegenhaltungen:
- WO-A2-2015/032989
- DE-A1-102007 032 991
- DE-A1-102015 206 520
- US-A1- 2014 120 742

## Beschreibung

Die vorliegende Erfindung betrifft eine Spindelvorrichtung zum Einsatz an einer numerisch gesteuerten Werkzeugmaschine.

### HINTERGRUND DER ERFINDUNG

Werkzeugmaschinen wie Fräs-, Dreh- oder Schleifmaschinen sind heutzutage Stand der Technik wenn es um präzise Fertigung von Werkstücken geht. Dabei sind in den vergangenen Jahren Präzision und Reproduzierbarkeit bei den Werkzeugmaschinen immer weiter verbessert worden. Zum einen durch sehr fein ansteuerbare Antriebe, aber auch durch sehr genaue Messsysteme, die den Fertigungsprozess anhand verschiedenster Parameter überwachen und so der Steuerung stets eine Rückmeldung über den ist-Zustand der Bearbeitung geben.

Aus der DE 10 2013 201 328 A1 ist eine Bearbeitungseinheit für eine Werkzeugmaschine bekannt, welche die Verlagerung der Spindelachse, die aufgrund von an der Schnittstelle anhaftenden Späne oder anderen Verunreinigungen aus einem vorherigen Bearbeitungsprozess eintreten kann, mittels eines axial und eines radial messenden Sensors erfasst. Auf Basis der erfassten Daten kann die Steuerung entsprechend eine Kompensation der Fehlstellung der Spindelachse bewirken.

Zudem ist aus der DE 20 2015 001 082 U1 eine Spindelvorrichtung für eine programmgesteuerte Werkzeugmaschine bekannt, die eine an dem Spindelgehäuse angeordnete Sensorikeinrichtung mit zumindest einem Körperschallsensor aufweist, der dazu eingerichtet ist, bei Schleifbearbeitungen auftretenden Körperschallwellen bzw. -schwingungen zu erfassen.

Hierbei tritt das Problem auf, dass die hochsensiblen Messeinrichtungen wie Körperschall- oder Vibrationssensoren, aber auch Druck- und Beschleunigungssensoren teils erhebliche Abweichungen bzw. Schwankungen in ihren Messdaten aufwiesen. Untersuchungen zu diesen Beobachtungen haben ergeben, dass die Messeinrichtungen unter anderem durch die elektrische Aufladung der Spindelwelle der Arbeitsspindel, die zum Beispiel durch die frequenzgeregelte Ansteuerung der Spindelmotoren hervorgerufen wird, beeinflusst wurden und dadurch die Messwerte einer hohen Streuung unterlagen, was sich negativ auf die Präzision der Werkzeugmaschine niederschlagen kann.

Weiterhin ist aus der DE 10 2007 032 991 A1 eine Schleifkontakteinrichtung zur Potenzialableitung an einer Werkzeugmaschinenspindel bekannt, die zur Ableitung des Potenzials der Maschinenspindel Schleifbürsten verwendet.

Zudem ist aus der DE 10 2015 206 520 A1 eine Ableitungseinrichtung bekannt, die stabförmige Schleifelemente zur Ableitung des Potenzials einer Maschinenwelle aufweist.

### ZUSAMMENFASSUNG DER ERFINDUNG

Eine Aufgabe der vorliegenden Erfindung ist es daher, eine Spindelvorrichtung zum Einsatz an einer numerisch gesteuerten Werkzeugmaschine bereitzustellen, mit der die obigen Probleme vermieden werden.

Diese Aufgabe wird gelöst durch eine Spindelvorrichtung nach Anspruch 1. Die abhängigen Ansprüche beziehen sich auf vorteilhafte Ausführungsbeispiele der erfindungsgemäßen Spindelvorrichtung.

Die erfindungsgemäße Spindelvorrichtung zum Einsatz an einer numerisch gesteuerten Werkzeugmaschine weist auf: ein Spindelgehäuse, und eine in dem Spindelgehäuse gelagerte Spindelwelle, wobei die Spindelvorrichtung weiterhin einen elektrisch geerdeten Abschnitt aufweist, der zumindest ein ein elektrisch leitfähiges Material aufweisendes Element hält, wobei das zumindest eine ein elektrisch leitfähiges Material aufweisende Element ein Stabelement ist, wobei das zumindest eine Stabelement derart angeordnet ist, dass es die Spindelwelle an einem Außenumfang der Spindelwelle tangential anliegend berührt, und wobei die Spindelvorrichtung für jedes Stabelement mindestens ein federndes Element aufweist, das das jeweilige Stabelement an den Außenumfang der Spindelwelle drückt.

Durch die erfindungsgemäße Spindelvorrichtung ist gewährleistet, dass zu jeder Zeit potentiell entstehende elektrische Ladungen an den umliegenden, geerdeten Teil der Arbeitsspindel abgeleitet werden. Damit wird vermieden, dass ein sich aufbauendes, elektrisches Potential die sensiblen Messeinrichtungen beeinflusst. Die Genauigkeit der Messwerte wird erhöht bzw. die Streuung der Messwerte wird verringert. Hierdurch kann wiederum die Werkzeugmaschine präziser gesteuert werden.

Insbesondere bietet die erfindungsgemäße Spindelvorrichtung den Vorteil, dass durch das tangentiale Anliegen der Stabelemente an der Spindelwelle, wobei die Stabelemente mit einer Vorspannung auf die Spindelwelle drücken können, ein automatisches Nachstellen der Stabelemente erfolgen kann, so dass stets mindestens eins der Stabelemente mit der Spindelwelle in Kontakt ist und so das elektrische Potential abgeleitet werden kann. Dies ist besonders dadurch vorteilhaft, da durch die Reibung zwischen Stabelement und Spindelwelle ein gewisses Maß an Verschleiß am Stabelement vorliegt.

Ist das Stabelement nun doch zu sehr verschlissen, bietet der Aufbau der erfindungsgemäßen Spindelvorrichtung zusätzlich die vorteilhafte Möglichkeit, die eingesetzten Stabelemente leicht zu wechseln, da diese mit wenigen Handgriffen aus den dafür vorgesehenen Bohrungen herausgenommen und durch neue Stabelemente ausgetauscht werden können.

Ein weiterer, besonders vorteilhafter Aspekt der erfindungsgemäßen Spindelvorrichtung ist, dass die Stabelemente und somit das Ableiten des elektrischen Potentials der Spindelwelle sehr nah bei den empfindlichen Messeinrichtungen stattfindet.

Da in den meisten Fällen die Messeinrichtungen nah am Werkzeug bzw. Werkstück angebracht sind, um möglichst präzise Messwerte zu erhalten, sind diese Messeinrichtungen auch nah an der Aufnahmevorrichtung der Spindelwelle vorgesehen. Daher ist es vorteilhaft, wenn auch die Erdung der Spindelwelle nah an der Aufnahmevorrichtung - respektive an den empfindlichen Messeinrichtungen - stattfindet.

Dabei ist es unerheblich, wie diese Aufnahmevorrichtung ausgestaltet ist. In dieser können sowohl Werkzeuge als auch Werkstücke aufgenommen werden, meist durch standardisierte Schnittstellen (z.B. Hohlschaftkegel oder Steilkegel, etc.), sehr wohl aber auch durch herstellerspezifische Schnittstellen.

Durch das federnde Element kann zusätzlich zu der Kraft der elastischen Verformung des Stabelements die Anpresskraft des Stabelements an die Spindelwelle erhöht werden, um den geerdeten Zustand der Spindelwelle zu sichern.

Eine besonders vorteilhafte Weiterbildung der Spindelvorrichtung besteht darin, dass das zumindest eine Stabelement als Kohlefaserstabelement ausgebildet ist.

Die Verwendung von Kohlefaser als Stabelement hat den Vorteil, dass es neben einer guten elektrischen Leitfähigkeit auch eine geringere Reibung im Vergleich zu Stabelementen aus metallischem Material mit dem Reibungspartner Metall aufweist. So können Reibungswiderstände der Spindelwelle vergleichsweise gering gehalten werden und dennoch eine optimale Ableitung des elektrischen Potentials der Spindelwelle garantiert werden.

Zudem bietet Kohlenstoff im Allgemeinen den Vorteil, dass es ein sehr widerstandsfähiges Material gegenüber mechanischen Einwirkungen ist. Daher empfiehlt es sich, dieses Material in mechanisch höher beanspruchten Bereichen einzusetzen.

Eine weitere besonders vorteilhafte Weiterbildung der Spindelvorrichtung besteht darin, dass der elektrisch geerdete Abschnitt der Spindelvorrichtung und eine Aufnahmevorrichtung zur Aufnahme von Werkzeugen und/oder Werkstücken an einer Stirnseite der Spindelwelle vorgesehen sind.

Zudem ergibt sich eine besonders vorteilhafte Weiterbildung der Spindelvorrichtung dadurch, dass an der Stirnseite der Spindelwelle weiterhin eine Sensoreinrichtung vorgesehen ist, die insbesondere zumindest einen Vibrationssensor zur Erfassung von Vibrationen und/oder einen Körperschallsensor zur Erfassung von Körperschallwellen oder-schwingungen aufweist.

Hierdurch kann, wie bereits weiter oben beschrieben, das entstehende elektrische Potential auf einem möglichst kurzen Weg aus der Spindelwelle abgeleitet werden, um eine möglichst geringe Beeinflussung der Messeinrichtungen zu bewirken bzw. um eine Beeinflussung dieser durch ein elektrisches Potential gänzlich zu vermeiden.

Eine weitere vorteilhafte Weiterbildung der Spindelvorrichtung besteht darin, dass der elektrisch geerdete Abschnitt teilringförmig, ringförmig oder hohlzylinderförmig ausgebildet ist, wobei sich die Spindelwelle durch einen Innendurchmesser des elektrisch geerdeten Abschnitts hindurch erstreckt.

Hierdurch ist es möglich, die Stabelemente möglichst nah an die Aufnahmevorrichtung der Spindelwelle heranzuführen.

Eine vorteilhafte Weiterbildung der Spindelvorrichtung besteht darin, dass der elektrisch geerdete Abschnitt zumindest eine Bohrung aufweist, in der das Stabelement in dem elektrisch geerdeten Abschnitt gehalten wird.

Zudem ergibt sich eine vorteilhafte Weiterbildung der Spindelvorrichtung dadurch, dass die Bohrung, in der das Stabelement gehalten wird, sekantenförmig in dem elektrisch geerdeten Abschnitt ausgebildet ist, derart, dass das in der Bohrung gehaltene Stabelement die Spindelwelle tangential anliegend berührt.

Die Ausformung der Bohrung und ihre Lage in Relation zu der Spindelwelle ermöglichen eine überaus vorteilhafte Anlage des Stabelements an der Spindelwelle, so dass bereits durch Einführen des Stabelements in die Bohrung eine Berührung zwischen Stabelement und Spindelwelle zustande kommt.

Eine besonders vorteilhafte Weiterbildung der Spindelvorrichtung besteht darin, dass der elektrisch geerdete Abschnitt zumindest zwei Stabelement hält, und jedes Stabelement die Spindelwelle an dem Außenumfang der Spindelwelle jeweils tangential anliegend berührt.

Neben der Verwendung von einem Stabelement als ableitendes Element für das elektrische Potential, das in der Spindelwelle entstehen kann, ist eine Mehrzahl an Stabelementen vorteilhaft, da, im Falle eines Kontaktverlustes eines der Stabelemente, das andere oder die anderen Stabelemente nach wie vor in Kontakt mit der Spindelwelle sind und zuverlässig das elektrische Potential an den geerdeten Teil der Arbeitsspindel ableiten können.

Ferner können durch mehrere Stabelemente auch höhere Potentiale (Potentialspitzen) sicher abgeleitet werden, ohne dabei die Stabelemente oder andere Teile der Arbeitsspindel durch z.B. Funkenbildung zu beschädigen.

Eine weitere vorteilhafte Weiterbildung der Spindelvorrichtung besteht darin, dass die Normalen der den Außenumfang der Spindelwelle tangential berührenden Stabelemente in einem Winkel von 45° bis 135° zueinander stehen.

Vorteilhaft können aber auch fest definierte Winkelabstände sein, wie besipielsweise 35°, 75°, 85° und dergleichen oder eine symmetrische Anordnung der Stabelemente (4 x 90°, 3 x 120°, usw.). Die genannten Werte sind dabei nur Beispiele, so dass die Erfindung nicht auf die genannten Werte beschränkt ist.

Eine besonders vorteilhafte Weiterbildung der Spindelvorrichtung besteht darin, dass das zumindest eine Stabelement die Spindelwelle unter einer elastischen Verformung tangential anliegend berührt.

Dies ermöglicht es, dass das Stabelement stets in Kontakt mit der Spindelwelle ist, auch wenn es zu Vibrationen in der Spindelwelle oder zum Verschleiß des Stabelements kommt.

Eine besonders vorteilhafte Weiterbildung der Spindelvorrichtung besteht darin, dass das federnde Element ferner eine gewindeförmige Einstellvorrichtung aufweist, mittels dieser die das Stabelement an den Außenumfang der Spindelwelle drückende Kraft eingestellt werden kann.

Besonders vorteilhaft ist es, wenn die Kraft des federnden Elements, die zusätzlich auf das Stabelement wirkt, stufenlos eingestellt werden kann. Dies kann sehr vorteilhaft mit einem Gewindestift oder Schraube erfolgen. Bei entsprechender Gewindewahl und Werkzeuggröße kann ferner die Kraft des federnden Elements sehr fein eingestellt werden.

Eine weitere vorteilhafte Weiterbildung der Spindelvorrichtung besteht darin, dass das Stabelement jeweils an beiden Enden eine Hülse aufweist, die flächig anliegend mit dem elektrisch geerdeten Abschnitt in Kontakt ist.

Damit eine problemlose und sichere Ableitung des elektrischen Potentials gewährleistet ist, ist es zudem vorteilhaft, wenn der Kontakt zwischen dem Stabelement und dem geerdeten Teil der Arbeitsspindel eine möglichst große Fläche aufweist, damit auch Potentialspitzen abgeleitet werden können, ohne dabei die Kontaktpunkte zwischen Stabelement und geerdetem Teil der Arbeitsspindel zu beschädigen aufgrund von z.B. Funkenbildung.

Eine besonders vorteilhafte Weiterbildung der Spindelvorrichtung besteht darin, dass mindestens eine Hülse an jedem Stabelement ein Gewinde zur Befestigung des Stabelements in dem elektrisch geerdeten Abschnitt aufweist.

Für eine effektive Befestigung der Stabelemente ist es von Vorteil, wenn diese mittels eines Gewindes in dem geerdeten Teil der Arbeitsspindel gegen ungewollte Verlagerung gesichert sind. Alternativ kann aber auch eine Schraube das jeweilige Stabelement in der Spindelvorrichtung sichern.

Durch die erfindungsgemäße Spindelvorrichtung können an der Spindelwelle auftretende elektrische Potentiale, die die Messeinrichtungen der Werkzeugmaschine negativ beeinflussen, effektiv abgeleitet werden und dadurch die Genauigkeit der Werkzeugmaschine erhöht werden.

Weitere Aspekte und deren Vorteile als auch Vorteile und speziellere Ausführungsmöglichkeiten der vorstehend beschriebenen Aspekte und Merkmale werden aus den folgenden, jedoch in keinster Weise einschränkend aufzufassenden Beschreibungen und Erläuterungen zu den angehängten Figuren beschrieben.

### KURZBESCHREIBUNG DER FIGUREN

- Fig. 1: zeigt eine beispielhafte schematische perspektivische Explosionsdarstellung einer Spindelvorrichtung für eine numerisch gesteuerte Werkzeugmaschine, die eine Sensorikeinrichtung aufweist;
- Fig. 2: zeigt eine beispielhafte schematische Darstellung einer Spindelvorrichtung für eine numerisch gesteuerte Werkzeugmaschine in einer Seiten und einer Schnittansicht gemäß einem Ausführungsbeispiel der vorliegenden Erfindung.

### DETAILLIERTE BESCHREIBUNG DER FIGUREN UND BEVORZUGTER AUSFÜHRUNGSBEISPIELE DER VORLIEGENDEN ERFINDUNG

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen.

Es sei hervorgehoben, dass die vorliegende Erfindung jedoch in keinster Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

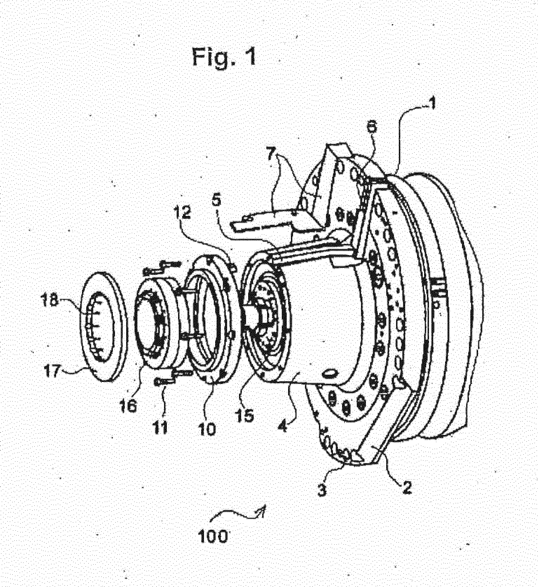

Fig. 1 zeigt eine beispielhafte schematische perspektivische Explosionsdarstellung einer Spindelvorrichtung 100 für eine numerisch gesteuerte Werkzeugmaschine (nicht dargestellt), die eine Sensorikeinrichtung aufweist.

Insbesondere zeigt Fig. 1 eine beispielhafte schematische perspektivische Explosionsdarstellung von Teilen einer Spindelvorrichtung 100 einer Arbeitsspindel, insbesondere einer werkzeugtragenden Arbeitsspindel, für eine numerisch gesteuerte Werkzeugmaschine (nicht dargestellt).

Die beispielhaft dargestellte Bearbeitungseinheit mit einer Arbeitsspindel bzw. Spindelvorrichtung 100 ist zum Beispiel zur Durchführung von Fräs- und/oder Bohrarbeiten an Werkstücken eingerichtet, die an Werkstückeinspannmitteln der Werkzeugmaschine eingespannt sind, z.B. unter Verwendung von - in Fig. 1 nicht dargestellten - Werkzeugen, insbesondere Fräs- und Bohrwerkzeugen, die üblicherweise unter Verwendung von an der Spindelwelle einwechselbaren Werkzeugschnittstellen an der Spindelwelle bzw. Spindelvorrichtung eingespannt werden können und dann durch die Spindelwelle bzw. Spindelvorrichtung zur Erzeugung bzw. zum Antrieb der Zerspanbewegung bei hohen Drehzahlen rotatorisch angetrieben werden.

Eine oder mehrere der Bearbeitungseinheiten mit einer Spindelwelle bzw. Spindelvorrichtungen 100 einer Arbeitsspindel können z.B. zur Bearbeitung bzw. Fertigung von Werkstücken für bzw. an Werkzeugmaschinen vorgesehen sein, insbesondere an programmgesteuerten bzw. numerisch steuerbaren Werkzeugmaschinen, wie Fräsmaschinen, Fräs-/Drehmaschinen, Universalfräsmaschinen, Universalwerkzeugmaschinen bzw. CNC-Bearbeitungszentren, die eine oder mehrere werkzeugtragende Arbeitsspindeln aufweisen.

An derartigen Spindelwellen können typischerweise Werkzeuge mit Werkzeugschnittstellen, wie z.B. Werkzeugkegel, insbesondere Morsekegel, Steilkegel bzw. Hohlschaftkegel, an Aufnahmevorrichtungen bzw. Werkzeugaufnahmen der Spindelwellen aufgenommen werden, um dann an der Arbeitsspindel angetrieben zu werden. Dies können unterschiedlichste Bohr- bzw. Fräswerkzeuge oder andere Werkzeuge sein, die jeweils an der typischerweise standardisierten Werkzeugschnittstelle bzw. dem Werkzeugkegel eingespannt bzw. fixiert werden.

Die Bearbeitungseinheit/Spindelvorrichtung 100 gemäß Fig. 1 umfasst beispielhaft ein Spindelgehäuse 1, das an einem weiteren Bauteil der Werkzeugmaschine befestigt bzw. mit diesem zusammengebaut werden kann, insbesondere mit einem Spindelkopfträger bzw. einem Schwenkkopf der Werkzeugmaschine und zwar ggf. mit Hilfe eines Ringflansches 2, der für die Befestigung an bzw. den Zusammenbau mit weiteren Bauteilen der Werkzeugmaschine eine Vielzahl von axialen Bohrungen 3 aufweist. Die Spindelwelle 15 ist im Inneren des Gehäuses 1 drehbar gelagert.

An der Vorderseite des Ringflansches 2 ist beispielhaft ein kegelstumpfförmiges Gehäuseteil 4 (elektrisch geerdeter Abschnitt) der Bearbeitungseinheit/Spindelvorrichtung 100 befestigt, in dessen Umfangswand beispielhaft eine (oder mehrere) nach außen offene Längsnut 5 eingearbeitet ist. Die Längsnut 5 findet ihre Fortsetzung beispielhaft in einer Aufnahmenut 6, die im Ringflansch 2 beispielhaft ausgebildet ist. Die Längsnut 5 und deren Fortsetzung, d.h. z.B. die Aufnahmenut 6, bilden beispielhaft einen Aufnahmekanal für ein (in Fig. 1 nicht dargestelltes) Energie- und/oder Messdatenkabel, das in diesem Aufnahmekanal 5, 6 verlegt und danach durch ein am Gehäuseteil 4 lösbar befestigtes Formblech 7 abgedeckt werden kann.

In Fig. 1 ist vor dem Stirnende des Gehäuseteils 4 beispielhaft ein erstes Ringelement 10 dargestellt, das mit der Stirnseite des Gehäuseteils 4 beispielhaft durch eine Mehrzahl von Befestigungselementen 11 (z.B. Schraubbolzen) lösbar befestigt werden kann. Das erste Ringelement 10 hat beispielhaft einen profilierten Querschnitt und stützt sich beispielhaft mit seiner in Fig. 1 rechten Stirnfläche (d.h. insbesondere mit der der Spindel zugewandten Seite) an der linken ringförmigen Stirnfläche des Gehäuseteils 4 ab bzw. ist an dieser angebracht bzw. lösbar befestigt.

An dem Stirnende der Spindelwelle 15 ist ein zweites Ringelement 16 durch eine Mehrzahl von Befestigungsmitteln (z.B. Stiftschrauben) an dem ersten Ringelement 10 lösbar befestigt, wobei das zweite Ringelement 16 zusammen mit der Spindelwelle 15 dreht und folglich einen Rotor darstellen kann.

Das zweite Ringelement 16 hat beispielhaft eine zylindrische innere Umfangsfläche und beispielhaft einen abgestuften Querschnitt. Abgedeckt wird das zweite Ringelement 16 beispielhaft durch ein ringförmiges Abdeckelement 17, das in Plananlage mit Hilfe von Befestigungsmitteln (z.B. Stiftschrauben 18) lösbar an der beispielhaft planen Endfläche der Spindel befestigt ist und die Spindelwelle unter Freilassung der Werkzeugaufnahme zum Einspannen eines Werkzeugschaftes stirnseitig abschließt.

In dem ersten Ringelement 10 können beispielhaft Empfänger- und/oder Übertragungsmittel untergebracht sein, die der berührungslosen Übertragung von Messdaten, Sensorsignalen und/oder Energiesignalen dienen können. Weiterhin ist an dem ersten Ringelement 10 beispielhaft ein Kabelgangabschnitt 12 für den elektrischen Anschluss an die Sensorik vorgesehen (z.B. Anschluss des/der Energie- und/oder Messkabel an das/die Empfänger- bzw. Übertragungsmittel), welcher dem Kabelkanal der Längsnut 5 gegenüberliegt und in montiertem Zustand in diesen Kabelkanal hineinragen kann.

In dem zweiten Ringelement 10 können ein oder mehrere Sensoren untergebracht sein. Dies kann z.B. Sensoren, z.B. Vibrationssensoren, umfassen, mit denen betriebsbedingte Verformungen der Spindel bzw. des Spindelkopfes in axialer und auch in Umfangsrichtung erfasst werden können. Verschiedene Sensortypen, beispielsweise druck-, spannungs- oder kraftsensible Sensoren, sind als Messfühler geeignet, um beispielsweise Ausrichtfehler der Spindel und/oder Formänderungen zu erfassen.

Die Sensorik umfasst gegebenenfalls eine mit den verschiedenen Sensoren elektronisch gekoppelte Auswerteeinrichtung, die eine Auswertung und auch eine Speicherung der erfassten Daten vornimmt und mikroprozessorgesteuert sein kann. Auch die Verschleißwerte der Spanwerkzeuge und eventuelle Beschädigungen von Maschinenbauteilen durch Stoßkollisionen können mit Hilfe dieser Sensorik erfasst, gespeichert und in der Maschinensteuerung entsprechend berücksichtigt werden. Des Weiteren ist es mit Vibrationssensoren möglich, Unwuchtmessungen durchzuführen bzw. Lagerschäden von Lagern der Spindelwelle auf Basis einer Auswertung der Messsignale zu detektieren.

Im Kabelkanal 5 des Gehäuseteils 4 verlegtes Kabel (Mess- und/oder Energiekabel) bis in den stationären Außenring (erstes Ringelement 10), der mit dem Spindeigehäuseteil 4 fest verbunden ist. In diesem Außenring (erstes Ringelement 10) befinden sich ggf. Anschlüsse für das Energie- und Messdatenkabel, wobei dieses Energie -bzw. Messkabel auch mit einem in dem stationären Außenring (erstes Ringelement 10) angeordneten Übertragungselement verbunden sein kann, dessen Gegenelement (Empfängerelement) sich in dem mit der Spindel drehenden Rotorring (zweites Ringelement 16) befinden kann.

Die oben beschriebene Spindelvorrichtung 100 ist lediglich als Beispiel für eine Spindelvorrichtung zu verstehen, wie sie heutzutage Stand der Technik ist und wofür Sensorik in bzw. an der Spindelwelle 15 eingesetzt wird. Jedoch kann eine andere Spindelvorrichtung 100 sehr wohl auch unterschiedliche Komponenten und Sensoren aufweisen und andere bzw. weitere Parameter zur Überwachung des Bearbeitungsprozesses erfassen. Die Ausführungsformen der beschriebenen Erfindung können auf der oben beschriebenen Spindelvorrichtung 100 wie auch auf anderen Spindelvorrichtungen, die hier nicht detailliert beschrieben sind, angewendet werden.

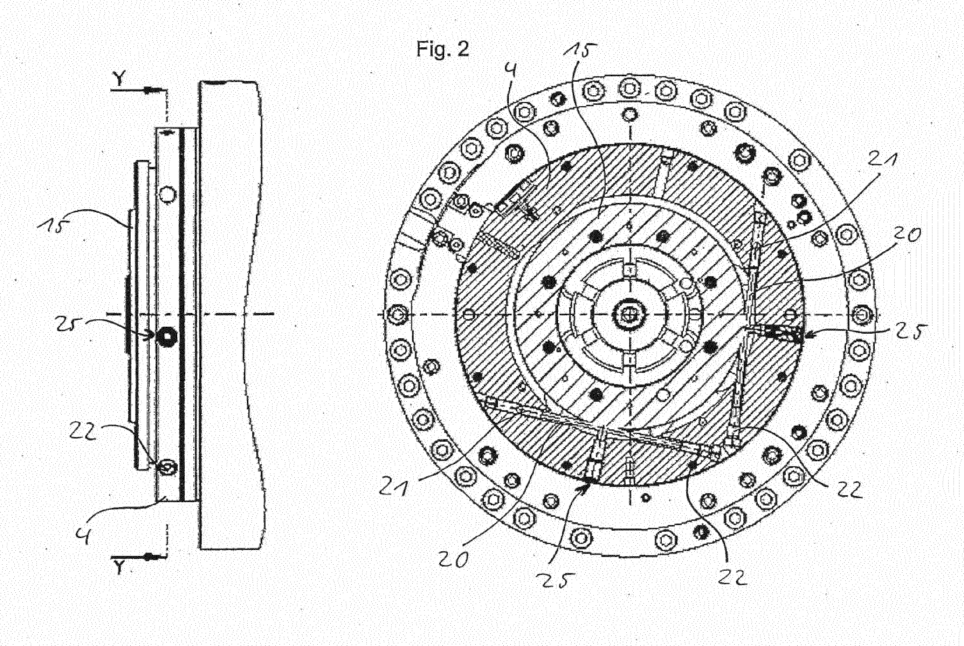

Fig. 2 zeigt eine beispielhafte schematische Darstellung einer Spindelvorrichtung 100 für eine numerisch gesteuerte Werkzeugmaschine (nicht dargestellt) in einer Seiten und einer Schnittansicht gemäß einem Ausführungsbeispiel der vorliegenden Erfindung.

Dabei sind in der Schnittansicht beispielhaft zwei Stabelemente 20 zu sehen, die jeweils an einem Ende eine Hülse 21 mit konisch zulaufendem Ende und ein Gewinde 22, das auch auf einer Hülse aufgebracht und dann auf das Stabelement gepresst werden kann, aufweisen. Das Gewinde 22 kann aber auch durch einen Gewindestift oder durch eine Schraube, je nach Anwendungsfall und Bauraum, ersetzt werden.

Dabei soll durch die eingesetzten Hülsen 21 eine möglichst flächige Anlage zwischen Stabelement 20 und Gehäuseteil 4 (elektrisch geerdeter Abschnitt) erzeugt werden. Nur so kann sichergestellt werden, dass auch hohe Potentialspitzen von der Spindelwelle 15 abgeleitet werden können und dabei das umliegende Material nicht beschädigen bzw. überlasten. Zudem bietet eine flächige Anlage der Hülse/Hülsen 21 den Vorteil, dass ein Klappern des Stabelements 20 reduziert bzw. vermieden werden kann. Ferner ist ein konisch zulaufendes Ende der Hülse 21, wie in Fig. 2 gezeigt, dahingehend vorteilhaft, da beim Einsetzen des Stabelements 20 in die Spindelvorrichtung 100 die Gefahr eines Verkantens des Stabelements 20 in dem Gehäuseteil 4 oder an der Spindelwelle 15 verringert werden kann. Dies erleichtert die Montage der Stabelemente 20 im erheblichen Maße.

Das Gewinde 22 bzw. ein Gewindestift oder eine Schraube sichern das Stabelement 20 gegen Verlagerung innerhalb der Spindelvorrichtung 100. Ferner kann durch die Sicherung mit einem Gewinde 22 ein "Klappern" des Stabelements 20 innerhalb der Spindelvorrichtung 100 verringert bzw. vermieden werden.

In der Schnittansicht der Fig. 2 ist zudem zu sehen, wie an jedem Stabelement 20 beispielhaft ein federndes Element 25 vorgesehen ist, um das jeweilige Stabelement 20 mit erhöhter Kraft an die Spindelwelle 15 zu drücken. Dies stellt sicher, dass das Stabelement 20 auch bei auftretenden, starken Vibrationen während der Werkstückbearbeitung sicher in Kontakt mit der Spindelwelle 15 bleibt.

Vorteilhafterweise kann sich die Kraft des federnden Elements 25, die auf das Stabelement 20 wirkt, ferner durch eine gewindeförmige Einstellvorrichtung einstellen lassen. So kann sehr fein dosiert die Anpresskraft des Stabelements 20 auf die Spindelwelle 15 erhöht oder verringert werden. Zudem kann das Einstellen durch die Gewindeform stufenlos erfolgen und bedarf in den meisten Fällen keiner zusätzlichen Sicherung. Ein weiterer Vorteil bei Verwendung eines Gewindes am federnden Element 25 ist, dass das federnde Element 25 im Falle eines Austauschens des Stabelements 20 sehr leicht zu demontieren ist und nach dem Austausch des Stabelements 20 auch wieder leicht eingesetzt werden kann.

Vorstehend wurden Beispiele bzw. Ausführungsbeispiele der vorliegenden Erfindung sowie deren Vorteile detailliert unter Bezugnahme auf die beigefügten Figuren beschrieben.

Es sei erneut hervorgehoben, dass die vorliegende Erfindung jedoch in keinster Weise auf die vorstehend beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschrieben Beispiele bzw. durch Kombination einzelner oder mehrerer der Merkmale der beschriebenen Beispiele im Rahmen des Schutzumfanges der unabhängigen Ansprüche umfasst sind.

### LISTE DER BEZUGSZEICHEN

- 1: Spindelgehäuse
- 2: Ringflansch
- 3: axiale Bohrung
- 4: elektrisch geerdeter Abschnitt / Gehäuseteil
- 5: offene Längsnut
- 6: Aufnahmenut
- 7: Formblech
- 10: erstes Ringelement
- 11: Befestigungsblech
- 12: Kabelgangabschnitt
- 15: Spindelwelle
- 16: zweites Ringelement
- 17: ringförmiges Abdeckelement
- 18: Stiftschrauben
- 20: Stabelement
- 21: Hülse
- 22: Gewinde des Stabelements
- 25: federndes Element
- 100: Spindelvorrichtung

## Patentansprüche

1. Spindelvorrichtung (100) zum Einsatz an einer numerisch gesteuerten Werkzeugmaschine, mit:
- einem Spindelgehäuse (1), und
- einer in dem Spindelgehäuse (1) gelagerten Spindelwelle (15),
wobei die Spindelvorrichtung (100) weiterhin einen elektrisch geerdeten Abschnitt (4) aufweist, der zumindest ein ein elektrisch leitfähiges Material aufweisendes Element (20) hält,
**dadurch gekennzeichnet, dass**
das zumindest eine ein elektrisch leitfähiges Material aufweisende Element (20) ein Stabelement (20) ist,
wobei das zumindest eine Stabelement (20) derart angeordnet ist, dass es die Spindelwelle (15) an einem Außenumfang der Spindelwelle (15) tangential anliegend berührt, und
wobei die Spindelvorrichtung (100) für jedes Stabelement (20) mindestens ein federndes Element (25) aufweist, das das jeweilige Stabelement (20) an den Außenumfang der Spindelwelle (15) drückt.

2. Spindelvorrichtung (100) nach Anspruch 1, **dadurch gekennzeichnet, dass**
das zumindest eine Stabelement (20) als Kohlefaserstabelement ausgebildet ist.

3. Spindelvorrichtung (100) nach Anspruch 1 oder 2, **dadurch gekennzeichnet, dass**
der elektrisch geerdete Abschnitt (4) der Spindelvorrichtung (100) und eine Aufnahmevorrichtung zur Aufnahme von Werkzeugen und/oder Werkstücken an einer Stirnseite der Spindelwelle (15) vorgesehen sind.

4. Spindelvorrichtung (100) nach Anspruch 3, **dadurch gekennzeichnet, dass**
an der Stirnseite der Spindelwelle (15) weiterhin eine Sensoreinrichtung vorgesehen ist, die insbesondere zumindest einen Vibrationssensor zur Erfassung von Vibrationen und/oder einen Körperschallsensor zur Erfassung von Körperschallwellen oder -schwingungen aufweist.

5. Spindelvorrichtung (100) nach einem der vorherigen Ansprüche, **dadurch gekennzeichnet, dass**
der elektrisch geerdete Abschnitt (4) teilringförmig, ringförmig oder hohlzylinderförmig ausgebildet ist, wobei sich die Spindelwelle (15) durch einen Innendurchmesser des elektrisch geerdeten Abschnitts (4) hindurch erstreckt.

6. Spindelvorrichtung (100) nach einem der vorherigen Ansprüche, **dadurch gekennzeichnet, dass**
der elektrisch geerdete Abschnitt (4) zumindest eine Bohrung aufweist, in der das Stabelement (20) in dem elektrisch geerdeten Abschnitt (4) gehalten wird.

7. Spindelvorrichtung (100) nach Anspruch 6, **dadurch gekennzeichnet, dass**
die Bohrung, in der das Stabelement (20) gehalten wird, sekantenförmig in dem elektrisch geerdeten Abschnitt ausgebildet ist, derart, dass das in der Bohrung gehaltene Stabelement (20) die Spindelwelle (15) tangential anliegend berührt.

8. Spindelvorrichtung (100) nach einem der vorherigen Ansprüche, **dadurch gekennzeichnet, dass**
der elektrisch geerdete Abschnitt (4) zumindest zwei Stabelement (20) hält, und jedes Stabelement (20) die Spindelwelle (15) an dem Außenumfang der Spindelwelle (15) jeweils tangential anliegend berührt.

9. Spindelvorrichtung (100) nach Anspruch 8, **dadurch gekennzeichnet, dass**
die Normalen der den Außenumfang der Spindelwelle (15) tangential berührenden Stabelemente (20) in einem Winkel von bis 135° zueinander stehen.

10. Spindelvorrichtung (100) nach einem der vorherigen Ansprüche, **dadurch gekennzeichnet, dass**
das zumindest eine Stabelement (20) die Spindelwelle (15) unter einer elastischen Verformung tangential anliegend berührt.

11. Spindelvorrichtung (100) nach einem der vorherigen Ansprüche, **dadurch gekennzeichnet, dass**
das federnde Element (25) ferner eine gewindeförmige Einstellvorrichtung aufweist, mittels dieser die das Stabelement (20) an den Außenumfang der Spindelwelle (15) drückende Kraft eingestellt werden kann.

12. Spindelvorrichtung (100) nach einem der vorherigen Ansprüche, **dadurch gekennzeichnet, dass**
das Stabelement (20) jeweils an beiden Enden eine Hülse (21) aufweist, die flächig anliegend mit dem elektrisch geerdeten Abschnitt (4) in Kontakt ist.

13. Spindelvorrichtung (100) nach Anspruch 12, **dadurch gekennzeichnet, dass**
mindestens eine Hülse (21) an jedem Stabelement (20) ein Gewinde (22) zur Befestigung des Stabelements (20) in dem elektrisch geerdeten Abschnitt (4) aufweist.

## Claims

1. A spindle device (100) for use on a numerically controlled machine tool, comprising:
- a spindle housing (1), and
- a spindle shaft (15) mounted in said spindle housing (1),
wherein said spindle device (100) further comprises an electrically grounded portion (4) holding at least one element (20) including an electrically conductive material,
**characterized in that**
said at least one element (20) including an electrically conductive material is a rod element (20),
wherein the at least one rod element (20) is arranged such that it contacts said spindle shaft (15) tangentially against an outer circumference of said spindle shaft (15), and
wherein, for each rod element (20), said spindle device (100) has at least one resilient element (25) pressing the respective rod element (20) against said outer circumference of said spindle shaft (15).

2. The spindle device (100) according to claim 1, **characterized in that** said at least one rod element (20) is configured as a carbon fiber rod element.

3. The spindle device (100) according to claim 1 or 2, **characterized in that**
said electrically grounded portion (4) of said spindle device (100) and a receiving device for receiving tools and/or workpieces are provided on an end face of said spindle shaft (15),

4. The spindle device (100) according to claim 3, **characterized in that**
on the end face of said spindle shaft (15), further provided is a sensor device which in particular has at least one vibration sensor for detecting vibrations and/or a structure borne sound sensor for detecting structure-borne sound waves or vibrations.

5. The spindle device (100) according to one of the preceding claims, **characterized in that**
said electrically grounded portion (4) is partially annular, annular or shaped like a hollow cylinder, said spindle shaft (15) extending through an inner diameter of said electrically grounded portion (4),

6. The spindle device (100) according to one of the preceding claims, **characterized in that**
said electrically grounded portion (4) has at least one bore in which said rod element (20) is held in said electrically grounded portion (4).

7. The spindle device (100) according to claim 6, **characterized in that**
said bore in which said rod element (20) is held is shaped secant-like in said electrically grounded portion such that said rod element (20) held in said bore contacts against said spindle shaft (15) tangentially.

8. The spindle device (100) according to one of the preceding claims, **characterized in that**
said electrically grounded portion (4) holds at least two rod elements (20), and each rod element (20) contacts against said spindle shaft (15) tangentially on the outer circumference of said spindle shaft (15).

9. The spindle device (100) according to claim 8, **characterized in that**
the normals of the rod elements (20) tangentially contacting the outer circumference of said spindle shaft (15) are at an angle of 45° to 135° to one another.

10. The spindle device (100) according to one of the preceding claims, **characterized in that**
said at least one rod element (20) contacts against said spindle shaft (15) tangentially when elastically deformed.

11. The spindle device (100) according to one of the preceding claims, **characterized in that**
said resilient element (25) further comprises a thread-shaped adjusting device by means of which the force pressing the rod element (20) against the outer circumference of said spindle shaft (15) can be adjusted.

12. The spindle device (100) according to one of the preceding claims, **characterized in that**
said rod element (20) has a sleeve (21) at both ends, said sleeve being in a real contact with said electrically grounded portion (4).

13. The spindle device (100) according to claim 12, **characterized in that**
at least one sleeve (21) on each rod element (20) has a thread (22) for fastening said rod element (20) in said electrically grounded portion (4).

## Revendications

1. Dispositif à broche (100) destiné à être utilisé sur une machine-outil à commande numérique, avec :
- un boîtier de broche (1), et
- un arbre de broche (15) monté dans le boîtier de broche (1),
dans lequel le dispositif à broche (100) présente en outre une partie mise à la terre électriquement (4), qui porte au moins un élément (20) présentant un matériau électro-conducteur,
**caractérisé en ce que**
l'au moins un élément (20) présentant un matériau électro-conducteur est un élément barre (20),
dans lequel l'au moins un élément barre (20) est disposé de telle sorte qu'il touche par application tangentielle l'arbre de broche (15) sur une périphérie extérieure de l'arbre de broche (15), et
dans lequel le dispositif à broche (100) présente pour chaque élément barre (20) au moins un élément à ressorts (25), qui presse l'élément barre (20) respectif sur la périphérie extérieure de l'arbre de broche (15).

2. Dispositif à broche (100) selon la revendication 1, **caractérisé en ce que**
l'au moins un élément barre (20) est réalisé en tant qu'élément barre en fibre de carbone.

3. Dispositif à broche (100) selon la revendication 1 ou 2, **caractérisé en ce que**
la partie mise à la terre électriquement (4) du dispositif à broche (100) et un dispositif de logement destiné à loger des outils et/ou pièces sont prévus sur une face frontale de l'arbre de broche (15).

4. Dispositif à broche (100) selon la revendication 3, **caractérisé en ce que**
un dispositif de détection, qui présente en particulier au moins un capteur de vibrations destiné à détecter des vibrations et/ou un capteur de bruits de structure destiné à détecter des ondes ou vibrations de bruits de structure, est prévu en outre sur la face frontale de l'arbre de broche (15).

5. Dispositif à broche (100) selon l'une quelconque des revendications précédentes, **caractérisé en ce que**
la partie mise à la terre électriquement (4) est réalisée de manière partiellement annulaire, annulaire ou en forme de cylindre creux, dans lequel l'arbre de broche (15) s'étend à travers un diamètre intérieur de la partie mise à la terre électriquement (4).

6. Dispositif à broche (100) selon l'une quelconque des revendications précédentes, **caractérisé en ce que**
la partie mise à la terre électriquement (4) présente au moins un trou, dans lequel l'élément barre (20) est retenu dans la partie mise à la terre électriquement (4).

7. Dispositif à broche (100) selon la revendication 6, **caractérisé en ce que**
le trou, dans lequel l'élément barre (20) est retenu, est réalisé en forme de sécante dans la partie mise à la terre électriquement, de telle sorte que l'élément barre (20) retenu dans le trou touche l'arbre de broche (15) par application tangentielle.

8. Dispositif à broche (100) selon l'une quelconque des revendications précédentes, **caractérisé en ce que**
la partie mise à la terre électriquement (4) porte au moins deux éléments barre (20), et chaque élément barre (20) touche l'arbre de broche (15) respectivement par application tangentielle sur la périphérie extérieure de l'arbre de broche (15).

9. Dispositif à broche (100) selon la revendication 8, **caractérisé en ce que**
les normales des éléments barre (20) touchant la périphérie extérieure de l'arbre de broche (15) de manière tangentielle forment l'une par rapport à l'autre un angle de à 135°.

10. Dispositif à broche (100) selon l'une quelconque des revendications précédentes, **caractérisé en ce que**
l'au moins un élément barre (20) touche l'arbre de broche (15) par application tangentielle sous l'effet d'une déformation élastique.

11. Dispositif à broche (100) selon l'une quelconque des revendications précédentes, **caractérisé en ce que**
l'élément à ressorts (25) présente en outre un dispositif de réglage en forme de filet, la force pressant l'élément barre (20) sur la périphérie extérieure de l'arbre de broche (15) peut être réglée au moyen de celui-ci.

12. Dispositif à broche (100) selon l'une quelconque des revendications précédentes, **caractérisé en ce que**
l'élément barre (20) présente respectivement aux deux extrémités un manchon (21), qui est en contact par application à plat avec la partie mise à la terre électriquement (4).

13. Dispositif à broche (100) selon la revendication 12, **caractérisé en ce que**
au moins un manchon (21) présente sur chaque élément barre (20) un filet (22) pour la fixation de l'élément barre (20) dans la partie mise à la terre électriquement (4).
